# DEMANDE DE BREVET EUROPEEN

(11) **EP 2 993 070 A2**
(43) Date de publication de la demande: **09.03.2016**
(21) Numéro de dépôt: 15183325.8
(22) Date de dépôt: 01.09.2015
(51) Int. Cl.: B60K 16/00, B60K 3/04, B60L 8/00

(54) **DISPOSITIF DE PRODUCTION D'ENERGIE ELECTRIQUE A PARTIR DE LA PRESSION DE L'AIR CIRCULANT SUR UN VEHICULE AUTOMOBILE EN MOUVEMENT OU A L'ARRET**

(30) Priorité: 03.09.2014 FR 1458222
(71) Demandeur: Maillot, Joseph Lucay, 93210 La Plaine Saint Denis (FR)
(72) Inventeur: Maillot, Joseph Lucay, 93210 La Plaine Saint Denis (FR)
(74) Mandataire: Deschamps, Samuel

(57) **Abrégé**

La présente invention se rapporte à un dispositif de production d'énergie électrique (10a) à partir d'un flux d'air (12a-12b) capté par toute partie adéquate d'un véhicule automobile (15) comportant au moins une turbine (16a-16b) positionnée dans une partie arrière du véhicule (15), et au moins un moyen de canalisation (20a-20b) du flux d'air sur l'au moins une turbine (16a-16b), le dispositif comportant deux turbines principales (16a-16b) positionnées symétriquement par rapport à un axe médian (X), ledit axe médian (X) découpant l'espace concerné en deux parties sensiblement égales dans le sens de la largeur, le dispositif comportant un moyen de division du flux d'air en plusieurs parties (12a-12b), ledit moyen de division étant disposé à une extrémité avant du véhicule (15), chaque partie de l'espace occupé par le dispositif comportant un moyen de canalisation (20a-20b) d'une partie (12a-12b) du flux d'air vers un moyen d'extraction (35).

## Description

### Domaine de l'invention

L'invention concerne un dispositif de production d'énergie électrique à partir de la pression de l'air circulant sur un véhicule automobile en mouvement ou à l'arrêt. La présente invention se rapporte au domaine des véhicules automobiles circulant en contact avec l'air que ce soit sur terre sur l'eau ou dans les airs.

L'invention trouve une application particulièrement avantageuse pour les véhicules hybrides ou électriques utilisant au moins en partie une énergie électrique pour se mouvoir.

### Etat de la technique

Il existe plusieurs dispositifs permettant de récupérer l'énergie de la pression exercée par l'air circulant sur un véhicule automobile en mouvement ou à l'arrêt pour produire de l'énergie électrique. Ces dispositifs utilisent classiquement au moins une turbine dont les pales sont positionnées dans le flux d'air circulant sur le toit du véhicule en mouvement. La turbine est reliée à au moins un alternateur transformant l'énergie mécanique de rotation de la turbine en énergie électrique.

De préférence, le dispositif comporte un moyen de canalisation du flux d'air par effet venturi afin de concentrer le flux d'air sur les pales de la turbine et un moyen d'extraction de l'air rejeté par les pales de la turbine.

La demande de brevet internationale numéro WO 2009/025377 décrit un véhicule automobile dont le toit est pourvu d'une turbine dont les pales s'étendent verticalement par rapport au véhicule. La turbine est disposée sur la partie arrière du toit du véhicule alors que la partie avant du toit du véhicule comporte un moyen de canalisation réalisé par des parois inclinées.

La demande de brevet internationale numéro 2009/116822 décrit un véhicule automobile dont le toit est pourvu de six turbines dont les pales s'étendent horizontalement par rapport au véhicule. Les turbines sont disposées selon deux rangés parallèles et sont entourées par un caisson apte à canaliser le flux d'air. Le caisson comporte une entrée d'air munie de parois inclinées et une sortie d'air située à l'extrémité de l'entrée d'air.

Le brevet français numéro 2 879 970 décrit un véhicule utilisant une énergie propre dont le principe est de fixer des alternateurs équipés d'ailettes sur leurs rotors dans des tuyères installés sur le toit d'un véhicule. L'air est accéléré à l'intérieure des tuyères par un effet venturi. Pour ce faire, chaque tuyère comporte un cône. La pointe du cône est orientée vers la prise d'air de la tuyère et la base du cône est positionnée devant des ailettes fixées obliquement sur un rotor d'un alternateur installé dans la tuyère. Un espace de circulation d'air est ménagé entre la paroi extérieure du cône et la paroi intérieure de la tuyère.

Les dispositifs existants ne permettent pas de récupérer efficacement l'air circulant sur un véhicule automobile car une grande partie du flux d'air circulant sur le véhicule n'est pas capté par les turbines.

### Exposé de l'invention

La présente invention entend remédier aux inconvénients de l'art antérieur en proposant un dispositif de production d'énergie électrique à partir de la pression de l'air circulant sur un véhicule automobile en mouvement ou à l'arrêt. Ce dispositif peut être installé sur toute partie adéquate de n'importe quel véhicule automobile circulant en contact avec l'air atmosphérique, mais pour faciliter sa présentation, dans l'exposé de présentation et dans le descriptif des dessins et des modes de réalisation de l'invention le dispositif présenté est installé sur le toit un véhicule automobile de type berline ou citadine. Ce dispositif ainsi installé permet d'utiliser la pression exercée par le flux d'air circulant sur le toit du véhicule en canalisant l'air vers deux turbines situées à l'arrière du toit du véhicule.

A cet effet, la présente invention se rapporte à un dispositif de production d'énergie électrique à partir d'un flux d'air circulant sur un toit d'un véhicule automobile comportant au moins une turbine positionnée dans une partie arrière du toit du véhicule, et au moins un moyen de canalisation du flux d'air sur l'au moins une turbine, le dispositif comportant deux turbines principales positionnées symétriquement par rapport à un axe médian, ledit axe médian découpant le toit du véhicule en deux parties sensiblement égales dans le sens de la largeur, le dispositif comportant un moyen de division du flux d'air en plusieurs parties, ledit moyen de division étant disposé à une extrémité avant du toit du véhicule, chaque partie du toit comportant un moyen de canalisation d'une partie du flux d'air.

L'invention permet ainsi d'améliorer la captation et la canalisation du flux d'air circulant sur un toit d'un véhicule automobile. L'invention permet ainsi de générer de l'énergie électrique lorsque le véhicule est en mouvement ou lorsqu'il est à l'arrêt et que la force du vent est suffisante pour vaincre la résistance des turbines. L'invention limite également la perte d'aérodynamisme liée à la présence du dispositif.

Selon un mode de réalisation, le moyen de division du flux d'air divise le flux d'air en deux parties égales selon l'axe médian.

Selon un mode de réalisation, les deux turbines principales comportent des pales s'étendant verticalement par rapport au véhicule.

Selon un mode de réalisation, les deux turbines principales comportent des pales s'étendant horizontalement par rapport au véhicule. Ce mode de réalisation permet de limiter l'encombrement en hauteur du véhicule.

Selon un mode de réalisation, le dispositif comporte une turbine verticale comportant des pales s'étendant verticalement par rapport au véhicule, ladite turbine verticale étant positionnée entre les deux turbines principales. Ce mode de réalisation permet d'améliorer la captation et la canalisation du flux d'air circulant sur un toit d'un véhicule automobile grâce à plusieurs arrivés d'air sur les pales verticales.

Selon un mode de réalisation, le moyen de division du flux d'air divise le flux d'air en trois parties égales. Ce mode de réalisation permet de moduler l'affectation de l'air entre la turbine verticale et les deux turbines principales, par exemple en affectant l'air uniquement sur la turbine verticale lorsque le véhicule est à l'arrêt.

Selon un mode de réalisation, le dispositif comporte également un moyen d'extraction du flux d'air rejeté par les turbines principales. Ce mode de réalisation permet de limiter la perte d'aérodynamisme liée à la présence du dispositif.

Selon un mode de réalisation, au moins une turbine comporte trois pales, chaque pale comportant un bras dont une extrémité est reliée à un axe d'entrainement de la turbine et une extrémité est pourvue d'un hémisphère comprenant une partie creuse.

Selon un mode de réalisation, l'axe d'entrainement et/ou le bras comporte un profil aérodynamique en losange ou de section circulaire. Ce mode de réalisation permet de limiter la perte d'aérodynamisme liée à la présence du dispositif.

Selon un mode de réalisation, au moins une turbine comporte des pales incurvées fixées sur un cylindre équipé de poids et de contrepoids et relié à un axe de rotation. Ce mode de réalisation permet de mieux capter l'énergie portée par le flux d'air circulant dans le dispositif installé sur un toit d'un véhicule et d'utiliser l'inertie de la turbine avec un faible flux d'air.

### Brève description des dessins

On comprendra mieux l'invention à l'aide de la description, faite ci-après à titre purement explicatif, des modes de réalisation de l'invention, en référence aux Figures dans lesquelles :
- la Figure 1 illustre un véhicule automobile équipé d'un dispositif de production d'énergie selon un premier mode de réalisation de l'invention dans une vue en coupe latérale ;
- la Figure 2 illustre le véhicule de la Figure 1 dans une vue en coupe de dessus ;
- la Figure 3 illustre une turbine du véhicule de la Figure 1 selon un mode de réalisation de l'invention;
- la Figure 4 illustre un véhicule automobile équipé d'un dispositif de production d'énergie selon un deuxième mode de réalisation de l'invention dans une vue en coupe de dessus ;
- la Figure 5 illustre un véhicule automobile équipé d'un dispositif de production d'énergie selon un troisième mode de réalisation de l'invention dans une vue en coupe latérale ;
- la Figure 6 illustre le véhicule automobile de la Figure 5 dans une vue en coupe de dessus ; et
- la Figure 7 illustre une turbine verticale du véhicule de la Figure 5 selon un premier mode de réalisation de l'invention.

### Description détaillée des modes de réalisation de l'invention

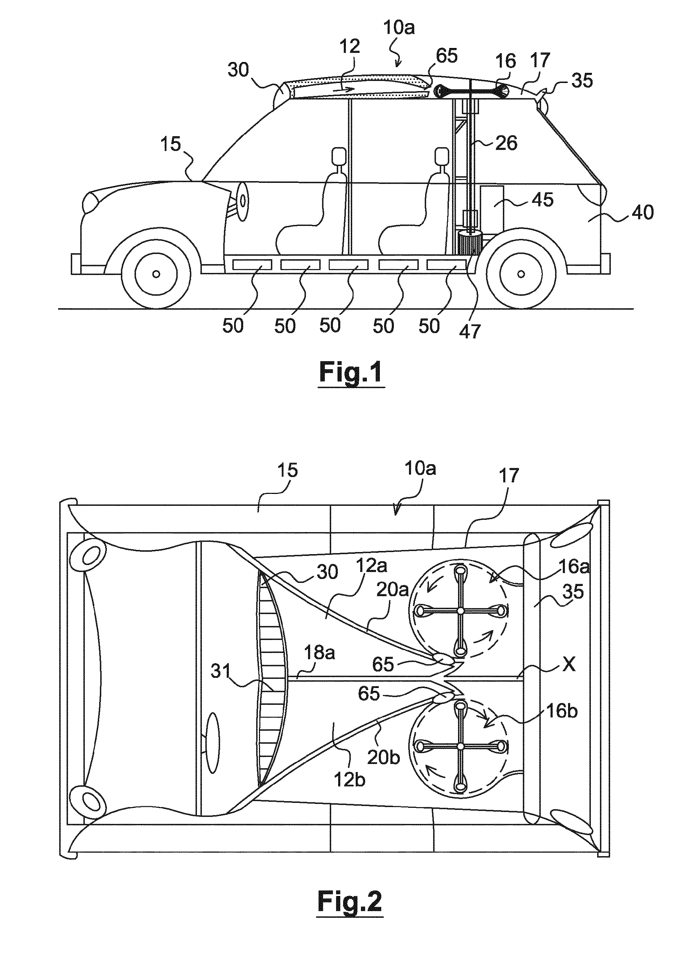

Les Figures 1 à 3 révèlent un véhicule automobile 15 muni d'un dispositif de production d'énergie électrique 10a positionné sur un toit 17 dudit véhicule 15. Le dispositif 10a comprend deux turbines 16a et 16b positionnées dans une partie arrière du toit 17 du véhicule 15. La partie arrière du véhicule 15 correspond à la partie proche du coffre 40 du véhicule 15. Les turbines 16 sont positionnées symétriquement par rapport à un axe médian X découpant le toit 17 en deux parties sensiblement égales dans le sens de la largeur.

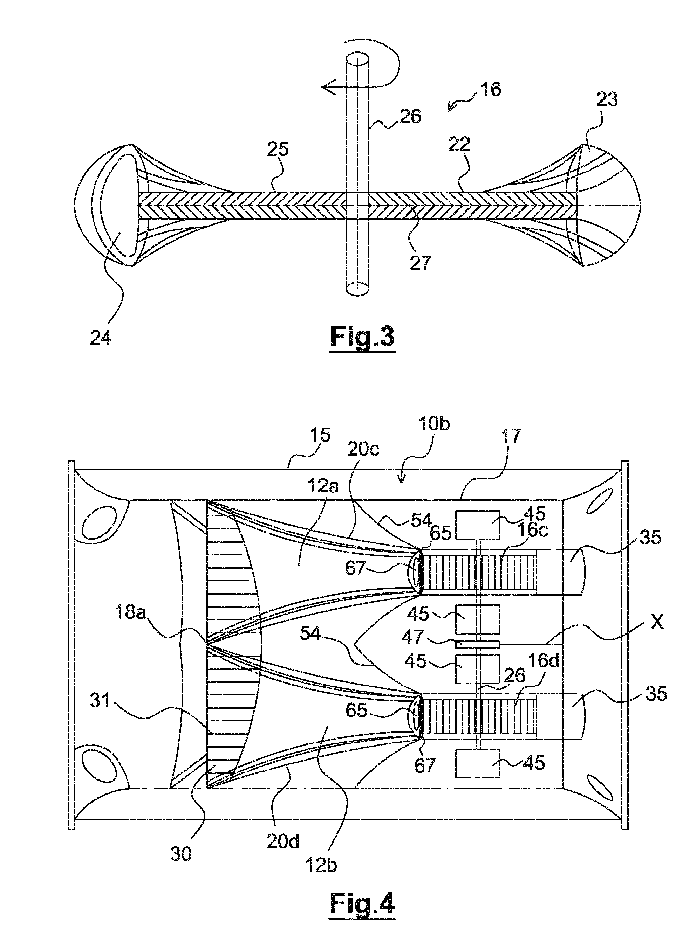

Un exemple de turbine 16 est représenté sur la Figure 3. La turbine comporte un axe 26 mobile en rotation et au moins une pale 22 comportant un bras à l'extrémité duquel est fixé un hémisphère comprenant une partie creuse 24 apte à réceptionner le flux d'air 12. Chaque turbine 16 peut comporter au moins deux pales 22. Lorsque la turbine 16 comporte plusieurs pâles 22, l'orientation des hémisphères varie d'une pâle à l'autre en fonction d'un sens de rotation de la turbine 16. Dans le premier mode de réalisation, chaque turbine 16 comporte trois pales 22 alors que dans le quatrième mode de réalisation chaque turbine comporte quatre pales 22. De préférence, l'axe d'entrainement 26 et/ou le bras 25 comporte un profil aérodynamique 27 en losange. En variante, la forme des pâles 22 des turbines 16 peut être différente, notamment correspondre à celle décrite dans le brevet français numéro 2 879 970.

Les turbines 16a et 16b sont alimentées respectivement par un flux d'air 12a et 12b. Chaque flux d'air 12a, 12b est conduit par un moyen de canalisation 20a, 20b entre une arrivé d'air 30 et des cloisons obliques apte à compacter l'air sous l'effet venturi jusqu'à un passage d'air 65 dirigé sur les pales 22 des turbines 16a, 16b. L'arrivé d'air 30 est disposée à une extrémité avant du toit 17 du véhicule 15 et préférentiellement équipée d'une grille de protection 31. En variante, le passage d'air 65 peut être remplacé par une buse de projection de l'air sur les pales 22.

Afin de canaliser le flux d'air 12 sur les deux turbines 16, le dispositif 10 comporte un moyen de division 18a du flux d'air 12 en deux parties égales dans le sens de la largeur du véhicule 15 suivant l'axe X. Cette division du flux d'air 12 peut être réalisée par une cloison de répartition. Le flux d'air rejeté par les turbines 16a, 16b est dirigé vers un moyen d'extraction 35 afin de limiter les pertes d'aérodynamisme du véhicule 15. De préférence, le dispositif 10 ainsi que les turbines 16 et leurs axes de rotation sont réalisés avec des matériaux ultralégers afin de ne pas impacter négativement le poids du véhicule 15 et limiter sa consommation.

L'axe 26 des turbines 16a, 16b s'étend derrière les sièges arrière du véhicule 15. L'axe est ensuite relié à un alternateur 45 par l'intermédiaire d'un dispositif de transmission 47. Dans un mode de réalisation plus efficace, un alternateur 45 peut être connecté directement sur chaque axe 26. L'alternateur 45 recharge des éléments de stockage 50 lorsque les turbines 16a, 16b tournent. L'invention permet ainsi de recharger des éléments de stockage 50 (batterie, super-condensateur...) lorsque le véhicule 15 se déplace ou lorsqu'il est à l'arrêt contre le vent et que la force du vent est suffisante pour contrer la résistance de l'alternateur 45. En variante, l'alternateur peut être placé dans un coffre sous le toit du véhicule, par exemple dans le cas d'un bus ou d'un camion.

Dans le cas des Figures 1 à 3, les deux turbines 16a, 16b comportent des pales 22 s'étendant horizontalement par rapport au véhicule 15. La Figure 4 illustre un mode de réalisation 10b pour lequel le dispositif 10 comprend deux turbines 16c, 16d comportant des pales 22 s'étendant verticalement par rapport au véhicule 15. Dans ce mode de réalisation, le dispositif 10 comporte plusieurs arrivés d'air 30 positionnées à différent niveau du toit 17 et canalisant le flux d'air 12 à différent niveau des turbines 16c, 16d par deux passages d'air 65, 67.

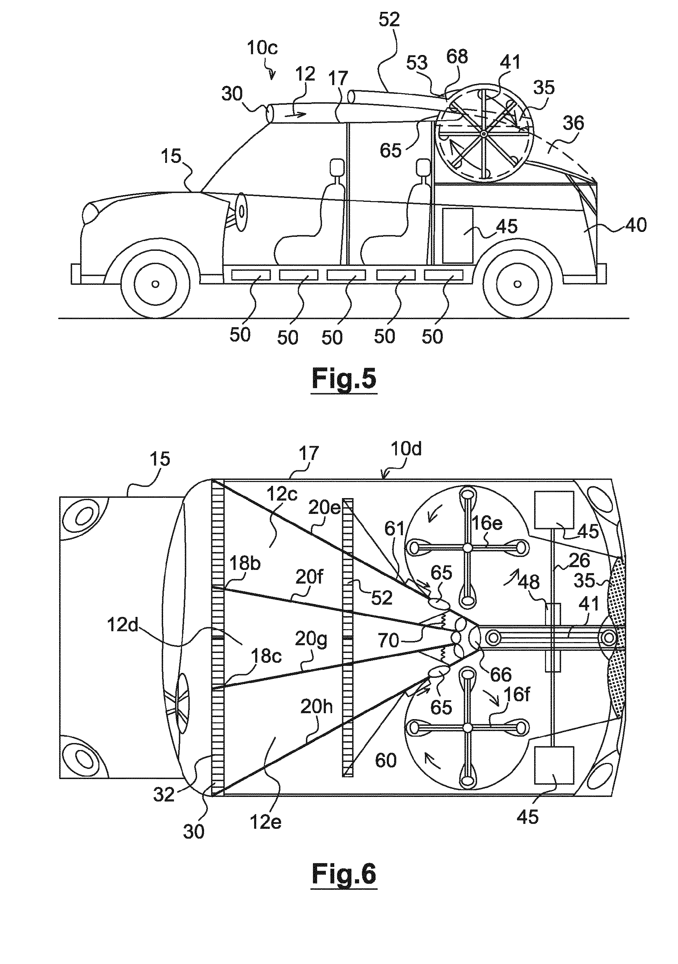

Les Figures 5 et 6 illustrent un mode de réalisation 10c dans lequel le véhicule comporte deux turbines dont les pales 22 s'étendant horizontalement et une turbine verticale 41 disposée sur le coffre 40. La turbine verticale 41 est en communication avec le flux d'air 12 rejeté par ledit moyen d'extraction 35. De plus, une entrée d'air supérieure 53 permet de canaliser une partie de l'air circulant au dessus du dispositif 10. L'air ainsi canalisé est dirigé par un passage 68 sur la turbine verticale 41. La turbine verticale 41 comporte également un moyen d'extraction 36 de l'air rejeté par la turbine verticale 41.

Le véhicule comporte deux turbines 16e, 16f dont les pales 22 s'étendent horizontalement et une turbine verticale 41 dont les pales 22 s'étendent verticalement par rapport au véhicule. La turbine verticale 41 est positionnée entre les deux turbines 16e et 16f. Le moyen de division de l'air à l'entrée du toit 17 comporte deux éléments 18b et 18c apte à diviser le flux d'air 12 en trois parties égales 12c, 12d et 12e par des cloisons 20e, 20f, 20g et 20h. L'arrivé d'air comporte des volets commandés 32 aptes à obturer ou ouvrir l'arrivé d'air en fonction des besoins du véhicule en aérodynamisme, par exemple pour les véhicule évoluant à grande vitesse. Les flux d'air 12c et 12e des compartiments latéraux sont dirigés sur les turbines 16e et 16f par les passages 65.

Les passages 65 peuvent être obturés au moins partiellement par des fermetures commandés 61 et/ou par des clapets à ressort 70 de manière à orienter tout ou partie du flux d'air 12 sur un passage 66 de la turbine verticale 41. En variante, les clapets peuvent être retenu par un câble et commandé depuis le véhicule. Cette configuration est particulièrement optimale lorsque le véhicule est à l'arrêt et que la force du vent de face au véhicule est suffisant pour faire tourner la turbine verticale 41 sans utiliser le moteur dudit véhicule. Au contraire, en situation de roulage, les passages 65 sont préférentiellement ouverts ou partiellement ouverts.

Dans le mode de réalisation présenté sur la Figure 6, les flux d'air 12c, 12d et 12e sont dirigés sur la turbine verticale 41 lorsque les passages 65 sont obturés par le biais d'un caisson de regroupement des flux d'air 12c, 12d et 12e en communication avec le passage 66. Ce mode de réalisation permet de placer une buse de répartition de l'air au niveau du passage 66 pour guider l'air sur les pales incurvées de la turbine verticale 41. En variante, une turbine à pales incurvées peut également être utilisée pour les turbines horizontales. En variante, les flux d'air 12c, 12d et 12e peuvent être dirigés directement sur la turbine verticale 41 sans passer par un caisson de regroupement et un passage 66. Ce mode de réalisation limite le phénomène de retour de l'air dans les compartiments latéraux lorsque la pression des flux d'air 12c, 12d et 12e est grandement disparate.

Dans une configuration classique, le flux d'air 12b du compartiment central alimente la turbine verticale 41. En outre, des arrivés d'air supérieure 52 et 53 canalisent également un flux d'air en direction de la turbine verticale 41.

Les deux turbines 16e et 16f ainsi que la turbine verticale 41 alimentent des alternateurs 45. La turbine verticale 41 est reliée par son axe 26 à deux alternateurs 45 disposés de part et d'autre de l'axe 26. En outre, la turbine verticale 41 comporte un dispositif de démultiplication 48 sur son axe 26 permettant de relier celui-ci à l'axe d'un alternateur pouvant tourner à une vitesse beaucoup plus rapide que celle de la turbine 41. Grâce à la démultiplication de la vitesse de la turbine 41, la turbine verticale 41 peut ainsi tourner sous la simple action du vent lorsque le véhicule est à l'arrêt ou circule très lentement et recharger le véhicule 15. Le dispositif 10 de l'invention est particulièrement adapté aux véhicules hybrides ou électriques.

En variante, étant donnée qu'il faut une grande quantité d'énergie pour démarrer les turbines, il est possible de démarrer les turbines par un moteur électrique jusqu'à une vitesse pour laquelle un faible flux d'air peut continuer de faire tourner les turbines sans utiliser le moteur électrique.

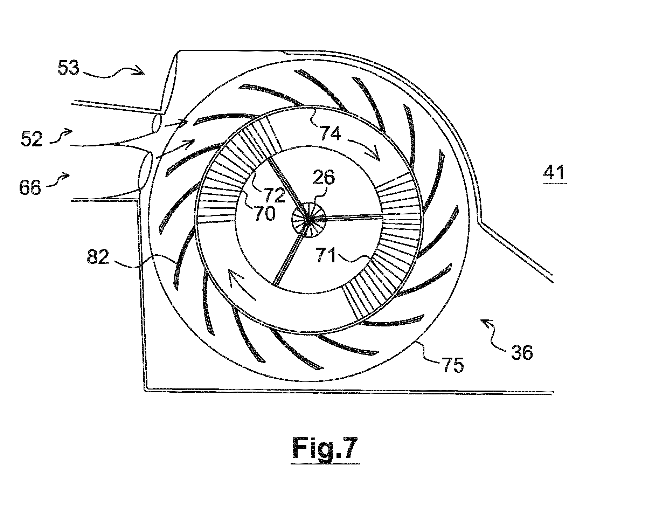

Un exemple de turbine verticale 41 est représenté sur la Figure 7. La turbine verticale 41 comporte un axe 26 mobile en rotation fixé avec un cylindre interne 70 et un cylindre externe 74. Sur le cylindre externe, seize pales 82 sont fixées et orientées pour réceptionner un flux d'air en provenance du passage 66 et des arrivés d'air supérieure 52 et 53. La turbine verticale 41 comporte un caisson 75 étanche à l'air et obturé sur les côtés de la turbine verticale 41. Entre les cylindres interne 70 et externe 74, la turbine verticale 41 comporte un poids 71 et un contrepoids 72 permettant d'utiliser l'inertie de la turbine verticale 41 pour faciliter sa rotation notamment en cas de trou d'air ou de réduction de la vitesse du véhicule ou lorsqu'il est stationné face au vent.

En variante, lorsque ce dispositif gène la visibilité du conducteur du véhicule sur l'espace situé à l'arrière de son véhicule, il peut être nécessaire de remplacer le rétroviseur intérieur par un écran vidéo relié à une camera pour permettre au conducteur de voir l'arrière de son véhicule.

## Revendications

1. Dispositif de production d'énergie électrique (10a-10d) à partir de la pression de l'air circulant sur un véhicule automobile en mouvement ou à l'arrêt par un dispositif installé sur le toit ou sur toute autre partie adéquate du véhicule comportant :
- au moins une turbine (16a-16f) positionnée dans une partie arrière du véhicule (15), et
- au moins un moyen de canalisation (20a-20h) du flux d'air (12) sur l'au moins une turbine (16a-16f),
**caractérisé en ce que** le dispositif comporte deux turbines principales (16a-16f) positionnées symétriquement par rapport à un axe médian (X), ledit axe médian (X) découpant l'espace concerné en deux parties sensiblement égales dans le sens de la largeur,
- le dispositif comportant un moyen de division (27) du flux d'air (12) en plusieurs parties (12a-12e), ledit moyen de division (27) étant disposé à une extrémité avant du véhicule (15),
- chaque partie de l'espace occupé par le dispositif comportant un moyen de canalisation (20a-20h) d'une partie (12a-12e) du flux d'air.

2. Dispositif selon la revendication 1, **caractérisé en ce que** le moyen de division (27) du flux d'air (12) divise le flux d'air (12) en deux parties (12a, 12b) égales selon l'axe médian (X).

3. Dispositif selon la revendication 1 ou 2, **caractérisé en ce que** les deux turbines principales (16a-16f) comportent des pales (22) s'étendant verticalement par rapport au véhicule (15).

4. Dispositif selon la revendication 1 ou 2, **caractérisé en ce que** les deux turbines principales (16a-16f) comportent des pales (22) s'étendant horizontalement par rapport au véhicule (15).

5. Dispositif selon la revendication 4, **caractérisé en ce qu'**il comporte une turbine verticale (41) comportant des pales (22) pouvant être incurvées s'étendant verticalement par rapport au véhicule (15), ladite turbine verticale (41) étant positionnée entre les deux turbines principales (16a-16f).

6. Dispositif selon la revendication 5, **caractérisé en ce que** le moyen de division (27) du flux d'air (12) divise le flux d'air en trois parties (12c-12e) égales.

7. Dispositif selon l'une des revendications 1 à 6, **caractérisé en ce qu'**il comporte également un moyen d'extraction (35) du flux d'air (12) rejeté par les turbines principales (16a-16f).

8. Dispositif selon l'une des revendications 1 à 7, **caractérisé en ce qu'**au moins une turbine (16a-16f) comporte trois pales (22), chaque pale (22) comportant un bras (25) dont une extrémité est reliée à un axe d'entrainement (26) de la turbine (16a-16f) et une extrémité est pourvue d'un hémisphère (23) comprenant une partie creuse (24).

9. Dispositif selon la revendication 8, **caractérisé en ce que** l'axe d'entrainement (26) et/ou le bras (25) comporte un profil aérodynamique (27) en losange ou de section circulaire.
